# EUROPÄISCHE PATENTSCHRIFT

(11) **EP 2 019 936 B1**
(45) Veröffentlichungstag und Bekanntmachung des Hinweises auf die Patenterteilung: **21.04.2010**
(21) Anmeldenummer: 07725209.6
(22) Anmeldetag: 15.05.2007
(51) Int. Cl.: F16H 1/22, F16H 57/02, F16H 35/10, F24J 2/54

(54) **ZWEIACHSANTRIEBSANORDNUNG**
TWO-AXLE DRIVE ARRANGEMENT
STRUCTURE A COMMANDE BIAXIALE

(30) Priorität: 24.05.2006 DE 102006024867
(43) Veröffentlichungstag der Anmeldung: 04.02.2009
(73) Patentinhaber: Flender Tübingen GmbH, 72072 Tübingen (DE)
(72) Erfinder: BÖING, Georg, 72108 Rottenburg (DE); SCHNURR, Wolfgang, 72147 Nehren (DE); KUNERT, Jens, 72070 Tübingen (DE)
(74) Vertreter: Kohler Schmid Möbus
(86) Internationale Anmeldenummer: PCT/EP2007/004290
(87) Internationale Veröffentlichungsnummer: WO 2007/134752

(56) Entgegenhaltungen:
- EP-A1- 0 045 463
- WO-A-88/04016
- DE-A1- 2 930 052
- DE-B- 1 053 269
- US-A- 4 383 520
- US-A- 4 574 659

## Beschreibung

Die Erfindung betrifft eine Zweiachsantriebsanordnung zum Halten und Bewegen großer Sonnenlicht absorbierender, bündelnder oder reflektierender Flächen um eine Azimutachse und eine Elevationsachse, wobei ein erstes durch einen ersten Antrieb angetriebenes Getriebe für eine Drehbewegung um die Azimutachse und ein zweites durch einen zweiten Antrieb angetriebenes Getriebe für eine Drehbewegung um die Elevationsachse vorgesehen sind und das erste Getriebe in einem ersten Gehäuseabschnitt und das zweite Getriebe in einem zweiten Gehäuseabschnitt angeordnet sind.

Solarkraftwerke arbeiten nach unterschiedlichen Prinzipien. Beispielsweise sind so genannte Parabolrinnen-Kraftwerke, Turm-Kraftwerke und Fotovoltaik-Kraftwerke bekannt. Bei allen diesen Kraftwerken müssen größere Flächen, beispielsweise große Spiegelflächen, Photovoltaikmodule, Fresnell-Module etc. bewegt werden. Diese Flächen müssen dem Sonnenstand mit einer hohen Genauigkeit nachgeführt werden, da schon geringste Positionsabweichungen zu einem schlechteren Wirkungsgrad führen. Insbesondere müssen die Flächen mit einer Genauigkeit < 1 mrad ausgerichtet werden. Aufgrund der großen Flächen, beispielsweise im Bereich von 120 m², müssen die Antriebe auch eine große Stabilität und Steifigkeit gegenüber Windkräften aufweisen, da aufgrund von Windkräften eine möglichst geringe Positionsabweichung auftreten soll.

Bei bekannten Zweiachsantriebsanordnungen sind die Getriebe in unterschiedlichen Gehäuseteilen angeordnet, wobei die Gehäuseteile relativ zueinander verdrehbar sind. Die Steifigkeit und Stabilität leiden unter dieser Verdrehbarkeit, da dadurch zusätzliches Spiel entsteht.

Die EP-A-0 045 463 offenbart eine Zweiachsantriebsanordnung gemäß dem Oberbegriff des unabhängigen Anspruchs 1.

Bei dieser gattungsgemäßen Zweiachsantriebsanordnung sind der erste und zweite Gehäuseabschnitt relativ zueinander unbeweglich.

Durch diese Maßnahme sind der erste und zweite Gehäuseabschnitt starr zueinander angeordnet. Dadurch lässt sich eine größere Steifigkeit als im Stand der Technik erreichen. Dabei ist es denkbar, dass der erste und zweite Gehäuseabschnitt fest miteinander verbunden sind, beispielsweise miteinander verschraubt oder verschweißt sind. Die starre Anordnung der Gehäuseabschnitte relativ zueinander ermöglicht außerdem eine höhere Positioniergenauigkeit. Dadurch kann ein höherer Wirkungsgrad hinsichtlich des Energieertrags erreicht werden.

Aufgabe der vorliegenden Erfindung ist es, eine Zweiachsantriebsanordnung bereitzustellen, die den oben genannten Anforderungen noch mehr genügt.

Erfindungsgemäß sind beide Getriebe vorteilhafterweise in einem gemeinsamen einstückigen Gehäuse angeordnet. Im Sinne der Erfindung wird unter einem einstückigen Gehäuse auch ein Gehäuse verstanden, welches Montagedeckel aufweist, die auf Montageöffnungen aufgeschraubt sind, beispielsweise auf Montageöffnungen für das Getriebe. Die Gehäusestruktur kann somit auf eine größtmögliche Steifigkeit ausgelegt werden, da keine Trennfuge zwischen den Gehäuseabschnitten besteht. Dies führt zu einer besseren Präzision und wirkt sich positiv auf die Überlastfähigkeit und die Kosten des Gehäuses aus.

Auf besonders einfache Art und Weise kann das einstückige Gehäuse realisiert werden, wenn es als Gussteil ausgebildet ist.

Bei einer bevorzugten Ausführungsform kann vorgesehen sein, dass das gesamte Gehäuse drehbar angeordnet ist. Dadurch wird die starre Anordnung innerhalb eines einzigen Gehäuses ermöglicht. Beide Getriebe beziehungsweise Teile beider Getriebe werden gemeinsam um die Azimutachse bewegt.

Vorteilhafterweise weist jedes Getriebe eine Schneckenabtriebsstufe auf. Dadurch lässt sich eine besonders hohe Genauigkeit, also exakte Ausrichtung der Flächen, erzielen.

Bei einer besonders bevorzugten Ausgestaltung der Erfindung kann vorgesehen sein, dass jedes Getriebe eine Schneckenabtriebsstufe und eine vorgeschaltete Schneckengetriebestufe aufweist, wodurch Selbsthemmung entsteht. Aufgrund der Selbsthemmung kann eine vorgegebene Position exakt gehalten werden. Dabei kann die Position gehalten werden, ohne dass zusätzliche Bremsen notwendig wären. Vorzugsweise sind beide Getriebestufen in das Gehäuse integriert.
Dadurch werden Kosteneinsparungen bei der Montage und der Fertigung ermöglicht.

Bei einer Ausgestaltung der Erfindung kann vorgesehen sein, dass die Schneckenwelle der Schneckenabtriebsstufe für eine Drehbewegung um die Elevationsachse unterhalb des zugeordneten Schneckenrads angeordnet ist. Dadurch wirkt die Gewichtskraft der angebauten Teile (z. B. Spiegelfläche) immer reduzierend auf das Verdrehspiel zwischen Schneckenrad und Schneckenwelle.

Bei einer Ausführungsform kann die Schneckenwelle der Schneckenabtriebsstufe für eine Drehbewegung um die Azimutachse auf der dem Elevationsschwenkbereich abgewandten Seite der Azimutachse angeordnet sein. Aufgrund dieser Anordnung wirkt die Gewichtskraft der Fläche reduzierend auf das Verdrehspiel zwischen Schneckenrad und Schneckenwelle des Getriebes für eine Drehbewegung um die Azimutachse. Durch das einteilige Gehäuse sind die Positionen der Schneckenwellen immer zueinander fest. Die Schneckenwellen sind im Gehäuse ortsfest angeordnet. Durch die oben erwähnte Anordnung lässt sich die Wirkung der äußeren Lasten auf die Schneckenwellen beeinflussen und positiv ausnutzen.

Wenn Antriebsschnittstellen zur Anordnung der Antriebe vorgesehen sind, können Standardantriebe, insbesondere Standard-Getriebe-Motoren mit einer definierten Schnittstelle, einfach an dem Gehäuse angebracht, insbesondere angeflanscht, werden. Somit können je nach Bedarf unterschiedlich dimensionierte Antriebe an das Gehäuse angeschlossen werden.

Da die durch die Zweiachsantriebsanordnung bewegten Flächen teilweise erheblichen Windkräften ausgesetzt sind, ist es vorteilhaft, wenn zumindest eine Überlastsicherung vorgesehen ist, um eine Zerstörung oder Beschädigung der Zweiachsantriebsanordnung zu vermeiden.

Beispielsweise kann das Schneckenrad der Schneckenabtriebsstufe für eine Drehbewegung um die Azimutachse eine Abstützung für das Gehäuse aufweisen, die im Normalbetrieb von dem Gehäuse durch einen Spalt beabstandet ist und auf der sich das Gehäuse bei Überlast abstützen kann. Dabei ist die Anordnung für Normallast, also einen Betrieb bis zu einer bestimmten Windstärke ausgelegt. Im Normalbetrieb (bei Normallast) ist der Spalt vorhanden. Treten Böen oder Stürme auf, kann eine Verformung oder Verwindung der Zweiachsantriebsanordnung erfolgen, sodass der Spalt verschwindet und eine Abstützung erfolgt.

Eine alternative oder zusätzliche Überlastsicherung ergibt sich, wenn das Gehäuse eine Abstützung für das Schneckenrad der Schneckenabtriebsstufe für eine Drehbewegung um die Elevationsachse aufweist, die im Normalbetrieb von dem Schneckenrad durch einen Spalt beabstandet ist und auf der sich das Schneckenrad bei Überlast abstützen kann.

Wenn die Schneckenwellen der Schneckenabtriebsstufen eine Duplex-Verzahnung oder eine konische Stirnradverzahnung aufweisen, kann das Zahnflankenspiel eingestellt werden. Dadurch kann die Präzision erhöht und das Spiel im Getriebe reduziert werden.

Das einstückige Gehäuse hat weiterhin den Vorteil, dass es so aufgebaut werden kann, dass alle Räume miteinander verbunden sind. Dadurch entsteht ein einziger Innenraum. Alle Getriebestufen können mit einem Schmierstoff versorgt werden. Dies ermöglicht einen einfachen Ölwechsel und eine einfachere Ölstandskontrolle und somit einen geringen Wartungsaufwand.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine erste Schnittdarstellung einer erfindungsgemäßen Zweiachsantriebsanordnung;

- Fig. 2: eine um 90° gedrehte Schnittdarstellung der Zweiachsantriebsanordnung;
- Fig. 3: eine perspektivische Ansicht des Gehäuses.

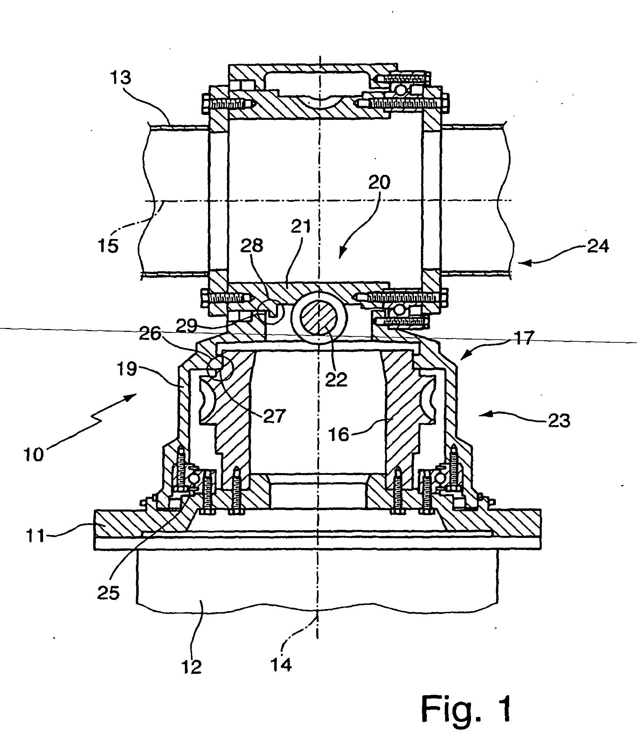

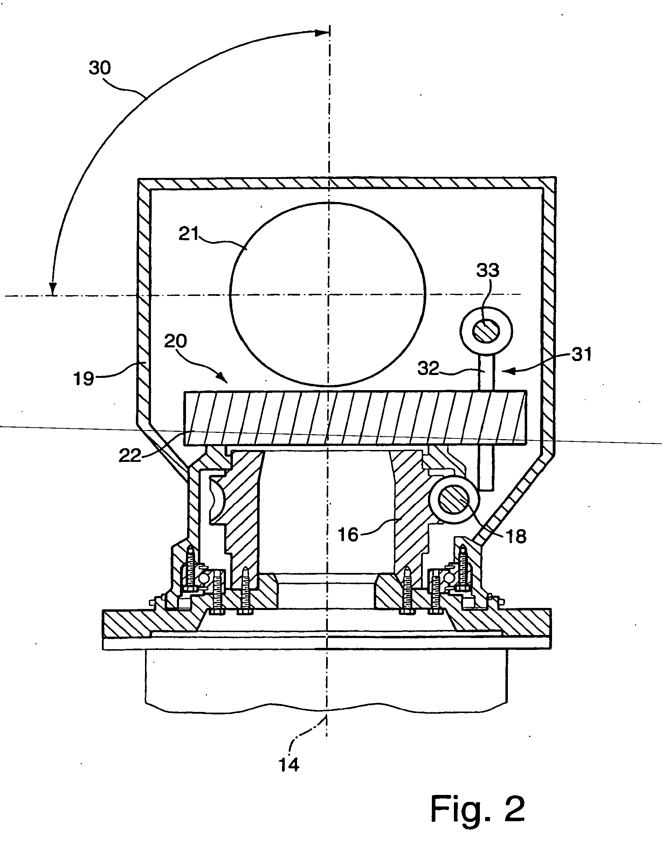

In der Figur 1 ist eine Zweiachsantriebsanordnung 10 im Schnitt gezeigt. Die Zweiachsantriebsanordnung weist einen Befestigungsflansch 11 auf, über den sie an seinem Unterbau 12 befestigbar ist. Eine hier nicht dargestellte, an der Welle 13 befestigbare Fläche kann durch die Zweiachsantriebsanordnung 10 zum einen um eine Azimutachse 14 und zum anderen um eine Elevationsachse 15 gedreht werden. An dem Befestigungsflansch 11 ist ein Schneckenrad 16 einer Schneckenabtriebsstufe 17 drehfest angeordnet. Durch Antrieb einer in der Figur 2 dargestellten Schneckenwelle 18, die ortsfest in einem Gehäuse 19 angeordnet ist, kann das Gehäuse 19 um die Azimutachse 14 verdreht werden.

In dem Gehäuse 19 ist weiterhin eine Schneckenabtriebsstufe 20 vorgesehen, die ein Schneckenrad 21 und eine Schneckenwelle 22 umfasst. Durch Antrieb der Schneckenwelle 22 kann das Schneckenrad 21 und damit die daran befestigte Welle 13 bewegt werden. Dadurch kann eine Drehung um die Elevationsachse 15 bewirkt werden. Die Schneckenabtriebsstufe 20 ist ebenfalls in dem Gehäuse 19 angeordnet, welches einstückig ausgebildet ist, wobei die Schneckenabtriebsstufen in unterschiedlichen Gehäuseabschnitten 23, 24 übereinander angeordnet sind.

Zwischen dem Gehäuse 19 und dem Befestigungsflansch 11 ist eine Drehverbindung 25 vorgesehen. Dabei handelt es sich um eine hochgenaue Drehverbindung, um Spiel zu minimieren.

Im Bereich 26 ist eine Überlastsicherung realisiert, wobei das Schneckenrad 16 eine Abstützung 27 für das Gehäuse 19 aufweist. Im Normalbetrieb sind die Abstützung 27 und das Gehäuse 19 durch einen in der Zeichnung nicht sichtbaren Spalt beabstandet. Treten extreme Kräfte auf, so kann sich das Gehäuse 19 auf die Abstützung 27 bewegen und sich dort abstützen.

Im Bereich 28 ist eine weitere Überlastsicherung ausgebildet, wobei sich das Schneckenrad 21 an dem Gehäuse 19 bei Überlast abstützen kann.
Hierzu weist das Gehäuse 19 eine Abstützung 29 auf, die im Normalbetrieb durch einen Spalt von dem Schneckenrad 21 beabstandet ist.

Bei der Schnittdarstellung der Figur 2 ist deutlich zu erkennen, dass die Schneckenwelle 22 unterhalb des Schneckenrads 21 angeordnet ist. Die Gewichtskraft einer Fläche, die im Elevationsschwenkbereich 30 verschwenkbar ist, drückt dadurch das Schneckenrad 21 in Richtung Schneckenwelle 22, wodurch Spiel minimiert wird.

Die Schneckenabtriebsstufe 20 ist einer Schneckengetriebestufe 31 nachgeordnet, die ein mit der Schneckenwelle 22 zusammenwirkendes Schneckenrad 32 und eine angetriebene Schneckenwelle 33 umfasst. Durch die Schneckenabtriebsstufe 20 und die Schneckengetriebestufe 31 wird ein selbsthemmendes Getriebe ausgebildet. Auch der Schneckenwelle 18 ist eine weitere Schneckengetriebestufe vorgeordnet, sodass auch hier innerhalb des Gehäuses 19 eine Schneckenabtriebsstufe 17 und eine Schneckengetriebestufe hintereinander geschaltet sind. Die durch die Schneckenstufen gebildeten Getriebe sind selbsthemmend.

Zu beachten ist weiterhin, dass die Schneckenwelle 18 auf der der Azimutachse 14 abgewandten Seite des Elevationsschwenkbereichs 30 angeordnet ist. Durch die Gewichtskraft einer zu bewegenden Fläche wird dadurch die Schneckenwelle 18 in Richtung Schneckenrad 16 gedrückt. Auch durch diese Maßnahme wird die Steifigkeit erhöht und Spiel reduziert.

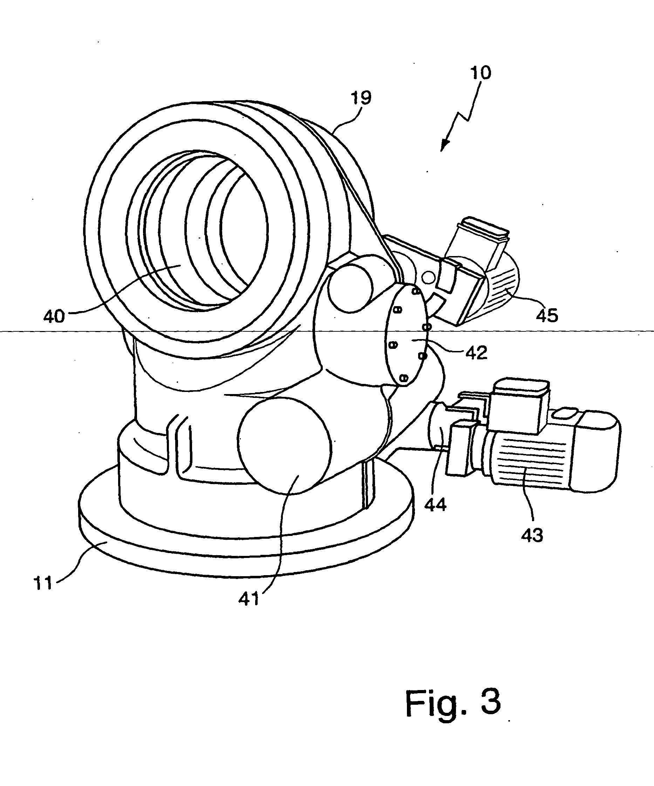

In der Figur 3 ist das Gehäuse 19 der Zweiachsantriebsanordnung 10 gezeigt. Die Welle 13 kann in der Öffnung 40 montiert werden. Zu erkennen ist weiterhin, dass das Gehäuse 19 einstückig ausgebildet ist. Lediglich Montagedeckel 41,42 sind aufgeschraubt. Der Antrieb 43, der an eine Antriebsschnittstelle 44 angeflanscht ist, treibt eine Schneckenwelle einer ersten Schneckengetriebestufe an. Diese Schneckengetriebestufe treibt wiederum die Schneckenwelle 18 an. Dadurch kann das Gehäuse 19 um die Azimutachse 14 verdreht werden. Der Antrieb 45 ist ebenfalls an eine Antriebsschnittstelle angeschlossen. Er treibt die Welle 33 an. Durch den Antrieb 45 kann somit eine Drehbewegung um die Elevationsachse 15 realisiert werden. Der Befestigungsflansch 11 ist ebenfalls sichtbar.

## Patentansprüche

1. Zweiachsantriebsanordnung (10) zum Halten und Bewegen großer Sonnenlicht absorbierender, bündelnder oder reflektierender Flächen um eine Azimutachse (14) und eine Elevationsachse (15), wobei ein erstes durch einen ersten Antrieb (43) angetriebenes Getriebe für eine Drehbewegung um die Azimutachse (14) und ein zweites durch einen zweiten Antrieb (45) angetriebenes Getriebe für eine Drehbewegung um die Elevationsachse (15) vorgesehen sind und das erste Getriebe in einem ersten Gehäuseabschnitt (23) und das zweite Getriebe in einem zweiten Gehäuseabschnitt (24) angeordnet sind, wobei der erste und zweite Gehäuseabschnitt (23, 24) relativ zueinander unbeweglich sind, **dadurch gekennzeichnet, dass** beide Getriebe In einem gemeinsamen einstückigen Gehäuse (19) angeordnet sind.

2. Zweiachsantriebsanordnung nach Anspruch 1, **dadurch gekennzeichnet, dass** das Gehäuse (19) als Gussteil ausgebildet ist.

3. Zweiachsantriebsanordnung nach einem der vorhergehenden Ansprüche, **dadurch gekennzeichnet, dass** das gesamte Gehäuse (19) drehbar angeordnet ist.

4. Zweiachsantriebsanordnung nach einem der vorhergehenden Ansprüche, **dadurch gekennzeichnet, dass** jedes Getriebe eine Schneckenabtriebsstufe (17, 20) aufweist.

5. Zweiachsantriebsanordnung nach einem der vorhergehenden Ansprüche, **dadurch gekennzeichnet, dass** jedes Getriebe eine Schneckenabtriebsstufe (17, 20) und eine vorgeschaltete Schneckengetriebestufen (31) aufweist, wodurch Selbsthemmung erreicht wird.

6. Zweiachsantriebsanordnung nach einem der vorhergehenden Ansprüche 4 oder 5, **dadurch gekennzeichnet, dass** die Schneckenwelle (22) der Schneckenabtriebsstufe (20) für eine Drehbewegung um die Elevationsachse (15) unterhalb des zugeordneten Schneckenrads (21) angeordnet ist.

7. Zweiachsantriebsanordnung nach einem der vorhergehenden Ansprüche 4 bis 6, **dadurch gekennzeichnet, dass** die Schneckenwelle (18) der Schneckenabtriebsstufe (17) für eine Drehbewegung um die Azimutachse (14) auf der dem Elevationsschwenkbereich (30) abgewandten Seite der Azimutachse (14) angeordnet ist.

8. Zweiachsantriebsanordnung nach einem der vorhergehenden Ansprüche, **dadurch gekennzeichnet, dass** Antriebsschnittstellen (44) zur Anordnung der Antriebe (43, 45) vorgesehen sind.

9. Zweiachsantriebsanordnung nach einem der vorhergehenden Ansprüche, **dadurch gekennzeichnet, dass** zumindest eine Überlastsicherung vorgesehen ist.

10. Zweiachsantriebsanordnung nach einem der Ansprüche 4 bis 7, **dadurch gekennzeichnet, dass** das Schneckenrad (16) der Schneckenabtriebsstufe (17) für eine Drehbewegung um die Azimutachse (14) eine Abstützung (27) für das Gehäuse (19) aufweist, die im Normalbetrieb von dem Gehäuse (19) durch einen Spalt beabstandet ist und auf der sich das Gehäuse (19) bei Überlast abstützen kann.

11. Zweiachsantriebsanordnung nach einem der Ansprüche 4 bis 7 oder 10, **dadurch gekennzeichnet, dass** das Gehäuse (19) eine Abstützung (29) für das Schneckenrad (21) der Schneckenabtriebsstufe (20) für eine Drehbewegung um die Elevationsachse (15) aufweist, die im Normalbetrieb von dem Schneckenrad (21) durch einen Spalt beabstandet ist und auf der sich das Schneckenrad (21) bei Überlast abstützen kann.

12. Zweiachsantriebsanordnung nach einem der Ansprüche 4 bis 7, 10 oder 11, **dadurch gekennzeichnet, dass** die Schneckenwellen (18, 22) der Schneckenabtriebsstufen (17, 20) eine Duplex-Verzahnung oder eine konische Stirnradverzahnung aufweisen.

## Claims

1. Biaxial drive arrangement (10) for holding and moving large sunlight-absorbing, sunlight-focusing or sunlight-reflecting surfaces about an azimuth axis (14) and an elevation axis (15), wherein a first gear driven by a first drive (43) is provided for rotational movement about the azimuth axis (14) and a second drive driven by a second gear (45) is provided for rotational movement about the elevation axis (15), and the first gear is arranged in a first housing portion (23) and the second gear is arranged in a second housing portion (24), said first and second housing portions (23, 24) being immovable relative to one another, **characterized in that** both drives are arranged in a common one-piece housing (19).

2. Biaxial drive arrangement according to Claim 1, **characterized in that** the housing (19) is configured as a casting.

3. Biaxial drive arrangement according to either of the preceding claims, **characterized in that** the whole housing (19) is rotatably arranged.

4. Biaxial drive arrangement according to any one of the preceding claims, **characterized in that** each gear has a worm output stage (17, 20).

5. Biaxial drive arrangement according to any one of the preceding claims, **characterized in that** each gear has a worm output stage (17, 20) propelled by a worm gear stage (31), with irreversible effect.

6. Biaxial drive arrangement according to either of the preceding claims 4 or 5, **characterized in that** the worm shaft (22) of the worm output stage (20) for rotational movement about the elevation axis (15) is arranged underneath its associated worm wheel (21).

7. Biaxial drive arrangement according to any one of the preceding claims 4 to 6, **characterized in that** the worm shaft (18) of the worm output stage (17) for rotational movement about the azimuth axis (14) is arranged on the opposite side of the azimuth axis (14) to the elevational tilting range.

8. Biaxial drive arrangement according to any one of the preceding claims, **characterized in that** drive interfaces (44) are provided for mounting the drives (43, 45).

9. Biaxial drive arrangement according to any one of the preceding claims, **characterized in that** at least one overload protection is provided.

10. Biaxial drive arrangement according to any one of Claims 4 to 7, **characterized in that** the worm wheel (16) of the worm output stage (17) for rotational movement about the azimuth axis (14) has a rest (27) for the housing (19) which is separated from the housing (19) by a gap during normal operation, and on which the housing (19) can rest in the event of overload.

11. Biaxial drive arrangement according to any one of Claims 4 to 7 or 10, **characterized in that** the housing (19) has a rest (29) for the worm wheel (21) of the worm output stage (20) for rotational movement about the elevation axis (15) which is separated from the worm wheel (21) by a gap during normal operation, and on which the worm wheel (21) can rest in the event of overload.

12. Biaxial drive arrangement according to any one of Claims 4 to 7, 10 or 11, **characterized in that** the worm shafts (18, 22) of the worm output stages (17, 20) have duplex toothing or conical spur gear toothing.

## Revendications

1. Dispositif d'entraînement biaxial (10) pour maintenir et déplacer de grandes surfaces absorbant, focalisant ou réfléchissant la lumière du soleil autour d'un axe azimutal (14) et d'un axe d'élévation (15), dans lequel on prévoit un premier renvoi entraîné par un premier entraînement (43) pour un mouvement de rotation autour de l'axe azimutal (14) et un second renvoi entraîné par un second entraînement (45) pour un mouvement de rotation autour de l'axe d'élévation (15), et on aménage le premier renvoi dans une première section de boîtier (23) et le second renvoi dans une seconde section de boîtier (24), dans lequel les première et seconde sections de boîtier (23, 24) sont immobiles l'une par rapport à l'autre, **caractérisé en ce que** l'on aménage les deux renvois dans un boîtier commun (19) d'un seul tenant.

2. Dispositif d'entraînement biaxial selon la revendication 1, **caractérisé en ce que** le boîtier (19) se présente sous la forme d'une pièce moulée.

3. Dispositif d'entraînement biaxial selon l'une quelconque des revendications précédentes, **caractérisé en ce que** l'ensemble du boîtier (19) est monté à rotation.

4. Dispositif d'entraînement biaxial selon l'une quelconque des revendications précédentes, **caractérisé en ce que** chaque renvoi présente un étage de sortie à vis sans fin (17, 20).

5. Dispositif d'entraînement biaxial selon l'une quelconque des revendications précédentes, **caractérisé en ce que** chaque renvoi présente un étage de sortie à vis sans fin (17, 20) et un étage de renvoi à vis sans fin (31) raccordé en amont, permettant d'assurer un autoblocage.

6. Dispositif d'entraînement biaxial selon l'une quelconque des revendications 4 ou 5, **caractérisé en ce que** l'arbre hélicoïdal (22) de l'étage de sortie à vis sans fin (20) est agencé pour un mouvement de rotation autour de l'axe d'élévation (15) en dessous de la roue hélicoïdale affectée (21).

7. Dispositif d'entraînement biaxial selon l'une quelconque des revendications précédentes 4 à 6, **caractérisé en ce que** l'arbre hélicoïdal (18) de l'étage de sortie à vis sans fin (17) est aménagé pour un mouvement de rotation autour de l'axe azimutal (14) sur le côté de l'axe azimutal (14) opposé à la zone de pivotement (30) de l'axe d'élévation.

8. Dispositif d'entraînement biaxial selon l'une quelconque des revendications précédentes, **caractérisé en ce qu'**il est prévu des interfaces d'entraînement (44) pour aménager les entraînements (43, 45).

9. Dispositif d'entraînement biaxial selon l'une quelconque des revendications précédentes, **caractérisé en ce qu'**il est prévu au moins un dispositif de sécurité contre les surcharges.

10. Dispositif d'entraînement biaxial selon l'une quelconque des revendications 4 à 7, **caractérisé en ce que** la roue hélicoïdale (16) de l'étage de sortie à vis sans fin (17) présente, pour un mouvement de rotation autour de l'axe azimutal (14), un appui (27) pour le boîtier (19) qui est espacé, en fonctionnement normal du boîtier (19), par un intervalle et sur lequel le boîtier (19) peut s'appuyer en cas de surcharge.

11. Dispositif d'entraînement biaxial selon l'une quelconque des revendications 4 à 7 ou 10, **caractérisé en ce que** le boîtier (19) présente un appui (2 9) pour la roue hélicoïdale (21) de l'étage de sortie à vis sans fin (20) pour un mouvement de rotation autour de l'axe d'élévation (15), qui est espacé en fonctionnement normal de la roue hélicoïdale (21) par un intervalle et sur lequel la roue hélicoïdale (21) peut s'appuyer en cas de surcharge.

12. Dispositif d'entraînement biaxial selon l'une quelconque des revendications 4 à 7, 10 ou 11, **caractérisé en ce que** les arbres hélicoïdaux (18, 22) des étages de sortie à vis sans fin (17, 20) présentent une denture double ou une denture à renvoi conique.
